Europäisches Patentamt

European Patent Office

Office européen des brevets

(11) Publication number: **0 426 911 A1**

# EUROPEAN PATENT APPLICATION

(21) Application number: 89311447.0

(22) Date of filing: 06.11.89

(51) Int. Cl.5: **H04L 12/24, H04L 12/56**

(43) Date of publication of application:
**15.05.91 Bulletin 91/20**

(84) Designated Contracting States:
**DE FR GB IT**

(71) Applicant: **Hewlett-Packard Company**
**Mail Stop 20 B-O, 3000 Hanover Street**
**Palo Alto, California 94304(US)**

(72) Inventor: **I'Anson, Colin Stephen**
**1 Fabian Drive**
**Stoke Gifford Bristol BS12 6XL(GB)**

(74) Representative: **Squibbs, Robert Francis et al**
**Hewlett-Packard Limited Cain Road**
**Bracknell, Berkshire RG12 1HN(GB)**

(54) Routing management in computer networks.

(57) A communication system includes a plurality of machines 21-24, 30, 33-35, etc) having unique identifiers and interconnected by a network of message switching nodes (10-14, 40, etc). Each node includes a dynamic routing table containing a plurality of machine identifiers and, for each, the next place in the network where a message to that machine should be directed to.

The system includes a Directory Information Base (DIB) which includes a machine listing. For each machine, the listing has an entry including attributes of the machine. The attributes include updating and routing information. The former identifies the parts of the system need to be be updated to maintain consistency if some part of the entry is changed, including in particular information as to which nodes require their dynamic routing tables to be updated in response to a change in that entry (as if the routing tables were part of the DIB). The latter gives node identifications and routes from those nodes to the potential receiving machines. The DIB includes updating means which, on a change in an entry, use the updating attribute of that entry to transmit updating information to the rest of the DIB, in a format defined for the whole of the DIB. Such information is thus also sent to the relevant nodes.

Each node includes means for updating the routing table in response to such transmissions from the updating means, including format conversion means for converting such transmissions to the format of the routing table.

FIG 1

## ROUTING MANAGEMENT IN COMPUTER NETWORKS

The present invention relates to computer networks, and more particularly to the control of the routing of packets and messages in such networks. (The term "message" alone will be used herein; it will be understood that the invention applies equally to packets.)

In a system comprising a plurality of separate computer units (machines), the machines need to be interconnected in a network of some kind, so that information can be passed between them. In simple instances, the "network" may be formed merely by designating one of the machines as a master or host machine, to which all the others are connected. Another relatively simple form of network is produced by providing separate connections between all possible pairs of machines - an all-connected-to-all network. However, with networks of substantial size, neither of these arrangements is feasible. Instead, the network becomes an entity distinct from the machines which it interconnects, and consists of a number of switching elements or nodes connected together in some form of network, with each machine connected to some part of the network.

With such a network, the sending of a message from one machine to another presents a problem. Assuming that the network is connected in the mathematical sense, a path through it from the one machine to the other clearly exists; but finding such a path (and preferably one which is reasonably efficient, in the sense of not using too much of the resources of the network) may be a far from trivial problem.

One approach to this problem is to provide each switching node with a routing table which is incomplete and dynamically maintained. This table is able to cope with the routing of messages which it is expected (likely) to be asked to route, but is incomplete in the sense that it will probably not be able to cope with messages with "unexpected" destinations. The dynamic maintenance of the routing table is a related aspect of this; there is some way of adding new routing information into the table to cope with such new destinations. Such updating is currently achieved by entering the required new table entry manually, by a controller who analyzes the new required destination in the light of the configuration of the system as a whole and determines what the new routing information should be.

The primary object of the present invention is to provide, in such a system, an improved technique for updating routing tables.

According to the present invention there is provided a communication system including a plurality of machines having unique identifiers and interconnected by a network of message switching nodes,

each node including a dynamic routing table for containing a plurality of machine identifiers and, for each, information about the routing of messages to that machine,

and the system including a Directory Information Base (DIB) which includes

a machine listing having, for each machine, an entry including attributes of the machine, the attributes including updating information as to which parts of the system need to be be updated to maintain consistency if some part of the entry is changed, and routing information giving node identifications and routes from those nodes to the potential receiving machines, and updating means for transmitting updating information, in a format defined for the whole of the DIB, to the rest of the DIB on a change in such an entry, in accordance with the updating attribute of that entry,

characterized in that

the updating attribute of each such entry includes information as to which nodes require their dynamic routing tables to be updated in response to a change in that entry,

the updating means are arranged transmit any associated change in routing information to those nodes, in the format defined for the DIB, and each node includes means for updating the routing table in response to such transmissions from the updating means, including format conversion means for converting such transmissions to the format of the routing table.

The arrangement contemplated in the present system includes a Directory Information Base (DIB), which contains fairly detailed information on the configuration of the whole system, and in particular information regarding each machine connected in the system. As will be seen, the organization of the DIB is flexible within wide limits. In particular, the DIB may consist of a wide variety of elements (Directory System Agents, DSAs) containing structured lists of various parts and/or levels of the system. The DIB will normally be spread over the system, with different BSAs residing in different units of the system. The DIB and DSAs may conveniently be in conformity with the CCITT X.500 and corresponding ISA standards.

Each DSA is normally organized so as to facilitate some particular aspect. For example, one DSA may list machines by manufacturer (for maintenance purposes, for example); another may list the machines attached to a particular node; and yet another may list connections between nodes in some part of the network. For present purposes, the directory must include listings of machines, with various attributes which will be discussed later. (It will be realized that many existing systems already include DIBs which have most of the properties required by the present invention.)

The present system is particularly concerned with the updating of routing tables in response to a change in the configuration of the system. One such change, for which updating is virtually essential, is the addition of a new machine; updating in response to the deletion of a machine is also of major importance, and updating in response to a change in a machine may also be desirable.

The design of the routing tables is, as discussed above, optimised for efficient look-up of the routing information required by the nodes. In the present system, the updating just discussed is achieved by (a) requiring a suitable updating of the DIB, and (b) the provision of a mechanism whereby the updating of relevant parts of the DIB is automatically copied into the relevant routing tables with the appropriate change of format of the information involved. That mechanism requires a suitable interface between the routing tables and the DIB, which should obviously be designed for efficiency in the management of the information.

A computer system embodying the present invention will now be described, by way of example, with reference to the drawings, in which:

Fig. 1 is a partial diagram of the system;

Fig. 2 is a simplified and partial block diagram of a node of the system; and

Fig. 3 is a simplified and partial block diagram of a machine of the system containing a part of the DIB.

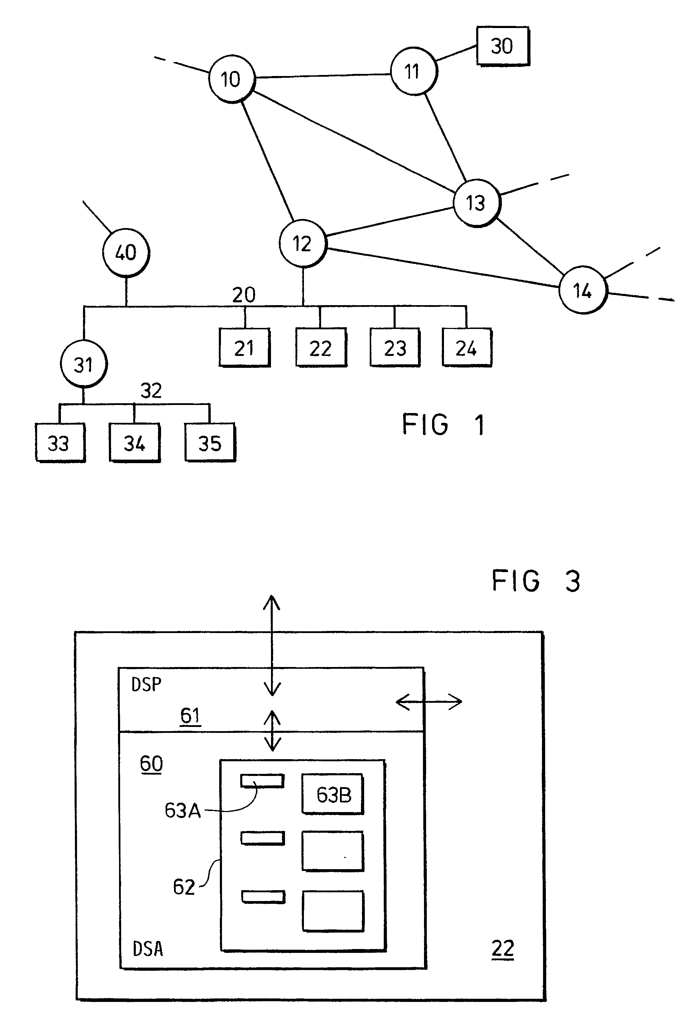

Referring to Fig. 1, the system includes a network comprising a plurality of switching nodes 10, 11, 12, 13, 14, etc connected in a mesh; the topology of the mesh may be complicated, but there will normally be many pairs of nodes which are not connected directly together (e.g. nodes 11 and 12). Machines are connected to the nodes; thus node 11 has a mainframe computer 30 connected to it, and node 12 has a plurality of machines 21, 22, 23, 24, etc connected to it. (It is of course possible for a node to have no machines connected directly to it.)

The nature of the individual nodes, and the manner in which machines are connected to them, may vary widely. Thus the node 12 may be connected to a LAN (local area network) 20 containing the machines 21, 22, 23, 24, etc; these machines may include PCs, printers, etc. In this instance, the node 12 may be a gateway. A machine, or a collection of machines such as the 20, need not be connected to only a single node; the LAN 20 may also for example be connected to the node 12 as shown, and to a further node 31 which forms a bridge to another nearby LAN 32 having machines 33, 34, 35, etc attached to it. The LAN 20 may also be connected to further nodes such as node 40, forming another part of the network (which may be connected to the network of nodes 10 to 14 only via the LAN 20). The connections between the nodes of the network thus need not be simple connections between pairs of nodes, but may be more complex connections between groups of nodes and machines.

In addition, the network may contain, for example, a complete packet switching system (PSS). Such a PSS would be represented in Fig. 1 as a simple connection between the various nodes (and machines, if any) connected to it. (If one looks inside the element representing the PSS, one will see a fresh network, which will have its own internal routing arrangements. These will generally be specific to the PSS, but in appropriate circumstances, the PSS could itself utilize the principles of the present invention.)

In the system, each machine has a unique identifier; this identifier may conveniently be regarded as an address. It will also usually have a name (an alphanumeric value, usually chosen to give some mnemonic indication of one or more characteristics of the machine, such as its "owner", the name of the network in which it exists, the name of the organizational unit in which its owner exists, the nature of the machine, and/or its manufacturer. (Each machine has a unique identifier, but there may be more than one name for a given machine.)

In many systems, the situation actually has a complication which was ignored in the last paragraph. This complication arises because in many systems, the primary identification is of users rather than machines. A given machine may have a number of users associated with ("attached to") it, messages will normally be directed to users rather then merely machines, and it is the users rather than the machines which have the unique identifiers and names.

For present purposes, however, we can confine our attention to machines. Although the ultimate goal is to route messages between users, the system we are describing is concerned essentially only with their routing between machines. Once a message has reached the appropriate machine, the machine itself will normally use conventional means to ensure that it reaches the appropriate user. In other words, we can safely regard the network as being limited to the region of the system between machines, rather than extending inside the machines to the users.

This involves a slight refinement, since if the primary identifiers and names are of users rather than machines, a given machine may have more than one identifier. This makes no essential difference, however; in particular, all the identifiers of a given machine are unique to that machine. In effect, there is a single physical machine which is equivalent to a plurality of notional machines having the various identifiers.

When a machine wants to send a message (a packet of information) to another machine, it obviously has to produce the identifier of that other machine. In the systems with which the present invention is concerned, we can assume that the machine will often not have sufficient information as to how that other machine can be reached; the routing of messages through the system is the responsibility of the network, not the machines connected to the network.

As discussed above, the routing information is held in the network in distributed form, as a set of routing tables (node routing tables, NRTs), one at each node (and possibly in some machines). Considering an individual node, this must pass on each incoming message to the appropriate one of the adjacent nodes. For each machine identifier which the node will recognize, the NRT of the node has an entry consisting of the destination machine identifier and the appropriate output port (i.e. which one, out of the nodes connected to the node we are considering, the message should be sent to). Depending on the nature and requirements of the network, this entry may also include the identifier of the next node through which the message is to pass.

The message thus, in general, passes through a sequence of network nodes in its journey from the sending machine to the destination machine, with each node passing it on to the next node in the route. Thus if, for example, machine 22 wants to send a message to machine 30, and the route happens to be via nodes 12, 13, and 11, machine 22 will send out the message with the label "Machine 30" attached to it. The NRT of node 12 will have an entry of the form "Machine 30: node 13", and the NRT of node 13 will have an entry of the form "Machine 30: node 11". (Obviously the label would in fact be the identifier of machine 30, not the name "Machine 30".)

If a route for the message does not exist (in the form of the appropriate entries in the NRTs), then the message cannot be sent. This may result in the node (or nodes) directly connected to the sending machine simply ignoring the message. In practice, however, these nodes may have a query facility. With this, the sending machine will first broadcast the identifier of the receiving machine to all the nodes to which it is connected. Each of these nodes will check its NRT for that identifier, and if it finds it, that node will send back a "match" signal to the sending machine, which will then send the full message (along with the identifier). That node will accept and forward the message; any other nodes which the message may reach will ignore it, as they do not have the associated machine identifier in their NRTs. If the sending machine does not get a signal back from any of the nodes to which it is connected, it will know that it cannot communicate with the intended receiving machine.

Considering further the organization of an individual node, the node must perform its routing with minimum delay, because each message which reaches the node has to be stored in the node, and it is obviously desirable for it to be so stored for as short a time as possible, to minimize the size of the node. The NRT is therefore stored in table form in the node, and is organized with a substantially fixed format which is optimized for fast look-up. The look-up consists of scanning one column of the NRT for the destination machine identifier and, if that identifier is found, extracting the output port number stored in the adjacent column in the same row.

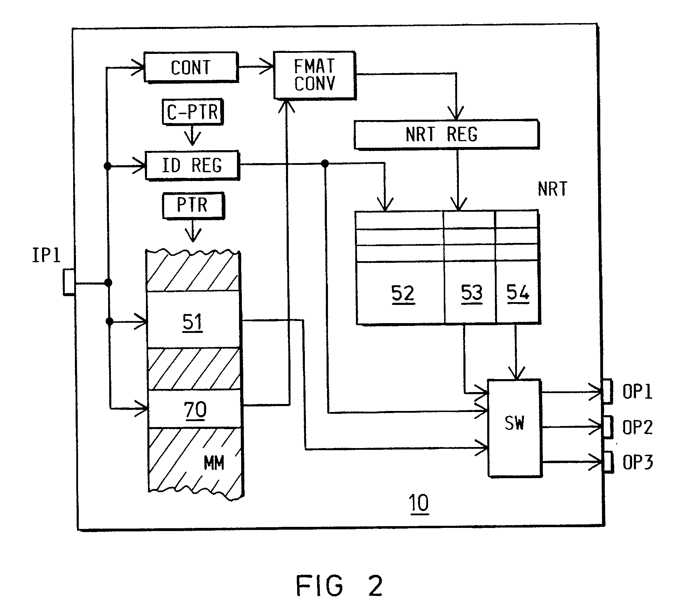

Fig. 2 shows the organization of a typical node 10. An incoming message, from either a machine connected to the node or another node, is received at an input port IP1. The message consists of the identifier of the destination machine together with the body of the message - the information being sent to that machine. The identifier is passed into an identifier storage register ID REG, and the body of the message is stored in a storage unit 51. (This storage unit may conveniently be an area of a main memory MM, identified by a pointer register PTR.) Although only one input port is shown, it will be realized that there is similar circuitry for each input port; it may be possible to use a common main memory MM for storing the message bodies from all input ports, by suitable time-multiplexing.

A table storage unit NRT stores the NRT table for the node. This unit is organized with a large number of rows, one for each identifier which the node can recognize, and three columns, 52 to 54; for each row, the identifier is stored in column 52, and associated routing information is stored in columns 53 and 54. (The identifiers may be stored in compressed (hashed) form.) Column 53 stores the output port on which the message is to be sent out. (Column 54 will be discussed shortly.)

Once the identifier has been stored in the register ID REG, it is used to search the table NRT for a match in column 52. If a match is found, then the output port number for that identifier is extracted from column 53 in the same row. Switching means SW feed the output ports OP1, OP2, OP3, etc, and are fed with the identifier from the register ID REG and the message body storage area 51. The port number from the table NRT controls the switching means SW to pass the message (identifier from register ID REG plus body from area 51) through to the appropriate output port.

If there is no match for the identifier value in register ID REG in the table NRT, then the process is aborted as soon as the "no match" signal is produced. No pointer is created, so no message body storage area 51 is created, or, if reception of the message body has already started, the pointer is erased and the rest of the message body is ignored.

If the link from that node is a simple link like that between nodes 12 and 13, then nothing further is needed. However, the output port may feed a number of nodes; for example, the output port of node 12 onto LAN 20 feeds two nodes, 31 and 40. The NRT table therefore includes a further column, column 54, which stores the identification (address) of which of these nodes should receive the message. This node identification is extracted from the table NRT along with the output port number, and fed into the switching means SW along with the identifier value in register ID REG as part of the message. Each node fed from the selected output port can therefore immediately recognize any messages which it is to receive.

The system would still work in the absence of this elaboration, but every node connected to the output port would have to receive the identifier of the message and match it against the contents of its NRT table to discover whether or not it was able to pass the message on further through the network.

Thus far, the node structure is conventional.

For the present system, the system must also include a directory information database (DIB). This DIB may be stored in a single machine, such as machine 30, or it may be stored in distributed form, with for example the DSA (directory system agent) concerned with the LAN 20 stored in unit 22 and other DSAs stored elsewhere. As discussed above, be definition the structure of the DIB is subject to few constraints. Thus broadly the same information may be organized in different forms for dealing with different types of enquiry and stored in different DSAs; some DSAs may store information about localized parts of the system, others may store information about the organization of the system as a whole (e.g. the network structure), and yet others may store information about, for example, machines with particular forms of processing facilities wherever they may be located in the system; and so on. There is potentially a similar freedom in the organization of the relationships of the various parts.

We assume that the DIB is substantially unified, in the sense that there is some mechanism for keeping the whole DIB consistent (so that duplicate copies of a part or all of it are kept updated, and any changes to any part of it are propagated throughout the DIB reasonably rapidly). In practice, the DSAs intercommunicate by means of a Directory System Protocol (DSP), which forms a standard interface which conceals differences between the internal organization of different DSAs and facilitates such updating. (There may be a further type of "agent", the Directory User Agent (DUA), and/or a further type of protocol, the Directory Access Protocol (DAP), by means of which users - both automatic and human - can access the DIB. For present purposes, the presence of the DUA between the DIB and the DAP and the distinction between the DSP and DAP will be ignored.)

Fig. 3 is a diagram of the organization of a DSA concerned with the properties of some or all of the machines in the system; such a DSA may for example reside in machine 22 and store information about the various machines in the LAN 20. The DSA 60 is resident in the machine 22, and is coupled to a DSP 61 through which it can communicate with other DSAs in the DIB. The DSA 60 can also be accessed by an operator through the machine 22, e.g. for updating the DSA. Depending on the design of the machine 22 and the DSA, either the DSP interface 61 or a separate interface (not shown) may be used for this purpose.

The DSA is shown as comprising a table 62 having a number of entries 63, each of which consists of a machine name 63A and a set of associated attributes 63B. The machine name is typically an alphanumeric value which must be unique in the system but may otherwise be chosen freely, and is usually chosen in practice to have some mnemonic significance. Each machine has several attributes; typical attributes are:
- machine identifier
- identification of network to which machine is attached
- owner
- repair data
- serial number
- functionality (e.g. transmission and reception protocols)
- updating information
- routing strategy.

The nature of most of these attributes is obvious, but the last two require discussion.

The updating information is the information as to which other parts of the DIB need to be be updated if some part of the entry 63 is changed. The DSP 61 includes a mechanism for extracting that information from the entry, converting it into standard DSP protocol, and forwarding it to any other DSAs in the DIB which need to be updated. (Such other DSAs may be in the machine 22 or elsewhere in the system; if they are in the machine 22, then it may not be necessary to convert the information into the full DSP protocol.)

The routing strategy attribute includes a list of potential receiving machines -those machines which the machine named in the entry part 63A is likely to want to communicate with - and, for each, the node identifications defining a route to that machine. In principle, each route can be stored as a separate list of nodes, but in practice it may be convenient for the routes to be stored in a tree form, so that common portions are stored only once.

For present purposes, the first and last of the attributes listed above - the machine identifier and the routing strategy - are important.

From one point of view, the crux of the present system lies in making the NRTs of the system nodes part of the DIB. The present invention provides means whereby, when the DIB is changed, any changes which are required in the NRTs are made automatically. This is achieved by providing interfacing means whereby the same mechanism as is used for copying changes into other DSAs of the DIB also makes the necessary parts of any changes in the NRTs.

More specifically, when an entry in the table 62 is changed, the DSP 61 (a) uses the updating information attribute to extract from the entry any information which has to be sent to other DSAs for their updating, (b) formats it under the DSP protocol, and (c) sends it off as the appropriate number of messages to those DSAs. In the present system, this process includes the construction, from the information in the routing attribute, of messages which will cause the replication of selected parts of the information in the NRTs, and the sending of those messages to the nodes concerned. Those nodes then update their NRTs, as will be discussed shortly. Thus from this point of view, the NRTs are treated as a part of the DIB which requires updating to maintain consistency in just the same way as other DSAs in the DIB.

The discussion above has been in terms of a change in an entry in the DSA table 62. One extreme instance is the deletion of a whole entry, representing the removal of the associated machine from the system. This naturally involves updating of other parts of the DIB. In particular, the NRTs have to be updated by the deletion of any entries concerning that machine. Another extreme instance is the addition of a new machine to the system, which requires the construction of an entire new entry in the DSA.

One example of a change to an existing entry is where a machine tries to send a message to another machine and finds that it cannot because the system does not include the necessary routing information. If this happens, then one way of resolving the problem is for a change to be made, in due course, to add the required routing information. The change would in this case be a change only to the routing information attribute of the machine concerned.

Returning to Fig. 2, the mechanism for updating the NRTs will be described. The updating messages sent out by the DSP 61 to the relevant nodes are management (control) messages, which differ from the messages discussed previously in that they are directed to nodes rather than end machines of the system.

Supposing the control message to arrive on input port IP1, the identification part is passed to a control register unit CONT which - for the message we are considering - recognizes it as being a control message for that node, and as being an NRT updating message. The body of the message is stored temporarily in an area 70 of the main memory MM identified by the contents of a control pointer register C-PTR. The control register CONT then causes the message body to be passed to a format converter FMAT CONV, which converts it from the DSP format into the format used by the NRT. The message, in the NRT format, is then passed to an NRT register NRT REG. If the message is for the addition of an entry to the NRT table, the contents of the NRT REG are then copied into a free row in the NRT table; if it is for the deletion of an entry, then the relevant row is found by matching the identifier in the NRT REG register with the identifiers in column 52 of the NRT table, and the contents of that row are erased.

The node 10 in fact contains means (not shown) implementing the DSP (Directory System Protocol), much like the machine shown in Fig. 3; these means control the above-described processing of the control messages.

It will be realized that the format of the NRT table may depend on the particular node which it is in. In particular, if different nodes are made by diffferent manufacturers, then they may use slightly different NRT formats and ordering of information. The format of the NRT updating messages received by the nodes is defined by the DSP protocol, and is independent of the particular node concerned; each node has to perform the appropriate format conversion to its particular internal NRT format.

The DIB can generally be interrogated in various ways and for various purposes. It is convenient to make the format converter bidirectional, so that the node can respond to enquiries in DSP protocol format by returning the appropriate information (if it is available in the node). This enables certain enquiries to the DIB to be made to a nearby node; this may be quicker and more convenient than obtaining the required information from the DSA containing it if that DSA is remote.

This technique can be further extended to allow the DIB to be updated by a local controller, either manually or automatically, with the change then being passed through the format converter to the DIB to update the DIB accordingly. This is however only possible if it is known which DSA (or DSAs) in the DIB need to be updated. It may be that one specific DSA is permanently associated with the DIB, in which case any change to the DIB would be automatically copied to that DSA. Otherwise, the relevant DSAs would have to be identified for updating by the controller.

An important further feature which is preferably included is that of inheritance. If a DSA is organized hierarchically, various attributes, including in particular the updating and routing attributes, may be "inherited" automatically by all entries below the entry in the tree where they appear. In this case, the DSP section 61 has to check, when a change to an entry is being made, whether there is any inherited routing information to be taken into account. This will often mean that the routing information for a new entry can be copied automatically, by inheritance, with only the identifier of the machine concerned having to be added to it.

It is also possible for identifiers to be constructed hierarchically. For example, the identifiers for all the machines on a particular LAN may be constructed with the initial portions identical, and differing only in their final portions. In this case, only the common initial portion of the identifier need be used as a single entry in the NRTs, with the final portion masked out ("don't care" characters).

It will be realized that the nodes could, in principle, be constructed to obtain the required routing information directly from routing information DSAs in the DIB. On receiving a message, the node would construct and send an enquiry to the relevant DSA, using the DSP protocol. The DSA would then return the required information, if it was included in the DSA, and the node would then use this for forwarding the message.

This technique, however, is highly disadvantageous, because it increases the delays in obtaining the routing information. Further, it would increase the traffic through the system; for if the relevant DSAs are stored at every node, the traffic involved in keeping the DIB consistent would involve many messages to multiple copies of DSAs at all the nodes, while otherwise, the routing enquiries from the nodes to the DSAs would generate much traffic. The node could store the information so obtained for future use with future messages to the same machine, so reducing the average delay, but this would involve its own complications, because there is no easy way of updating information stored in this way in the node. These disadvantages are largely overcome by the present system.

It would, however, be possible to combine this technique with the present invention, so that the system could use this technique to attempt to transmit a message if the required routing information was not present in the NRTs.

## Claims

1. A communication system including a plurality of machines (21-24, 30, 33-35, etc) having unique identifiers and interconnected by a network of message switching nodes (10-14, 40, etc),
each node including a dynamic routing table (NRT) for containing a plurality of machine identifiers and, for each, information about the routing of messages to that machine,
and the system including a Directory Information Base (DIB) (DSA 60, etc) which includes
a machine listing (62) having, for each machine, an entry (63) including attributes (63B) of the machine, the attributes including updating information as to which parts of the system need to be be updated to maintain consistency if some part of the entry is changed, and routing information giving node identifications and routes from those nodes to the potential receiving machines, and
updating means (in DSP 61) for transmitting updating information, in a format (DSP) defined for the whole of the DIB, to the rest of the DIB on a change in such an entry, in accordance with the updating attribute of that entry, characterized in that
the updating attribute of each such entry includes information as to which nodes require their dynamic routing tables to be updated in response to a change in that entry,
the updating means are arranged transmit any associated change in routing information to those nodes, in the format defined for the DIB, and each node includes means (CONT, 70, NRT REG) for updating the routing table in response to such transmissions from the updating means, including format conversion means (FMAT CONV) for converting such transmissions to the format of the routing table.

2. A communication system according to claim 1, characterized in that the rou ting attribute in each entry in the machine listing table in the DIB is organized as a series of entries, one for each step of the route, with each entry in the list has two components identifying the two nodes involved in that step.

3. A communication system according to any previous claim, characterized in that in each node, the information about the routing of messages in the dynamic routing table comprises, for each machine identifier, the port (column 53) on which a message to that machine should be emitted and the node (column 54) connected to that port which should next receive the message.

4. A communication system according to any previous claim, characterized in that the DIB is distributed in the system.

5. A communication system according to any previous claim, characterized in that the machine listing is organized hierarchically with at least parts of the updating information and routing information attributes being inherited.

6. A communication system according to any previous claim, characterized in that in at least some of the nodes, the format conversion means operates bidirectionally and such nodes include means for interrogating the contents of the routing table using the format defined for the DIB.

FIG 1

FIG 3

FIG 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 213 276 (IBM)<br>* Column 14, line 55 - column 15, line 12; column 27, lines 23-50; abstract * | 1-14 | H 04 L 12/24<br>H 04 L 12/56 |
| A | IEEE JOURNAL ON SELECTED AREAS IN COMMUNICATIONS, vol. 7, no. 7, September 1989, pages 1104-1114, IEEE, New York, US; L.N. CASSEL et al.: "Network management architectures and protocols: problems and approaches"<br>* Page 1104, right-hand column , lines 16-31; page 1106, lines 11-34; page 1109, right-handcolumn, line 45; figure 1 * | 1-5 | |
| A | IEEE GLOBAL TELECOMMUNICATIONS CONFERENCE, GLOBECOM'83, San Diego, CA, 28th November - 1st December 1983, pages 892-897, IEEE, New York, US; J.M. KALISZEWSKI: "Routing algorithm and route optimization on SITA data transport network"<br>* Page 894, left-hand column, lines 15-27; page 896, right-hand column, lines 7-12 * | 1-5 | TECHNICAL FIELDS SEARCHED (Int. Cl.5)<br><br>H 04 L |
| A | IBM TECHNICAL DISCLOSURE BULLETIN, vol. 31, no. 4, September 1988, pages 441-446, Armonk, New York, US; "Dynamic serial network packet switches"<br>* Page 443, lines 8-12; page 444, lines 3-8; figures 1,3 * | 1-5 | |

The present search report has been drawn up for all claims

| Place of search | Date of completion of the search | Examiner |
|---|---|---|
| THE HAGUE | 26-06-1990 | DE LA FUENTE DEL AGUA P. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P0401)